# EUROPÄISCHE PATENTSCHRIFT

(11) **EP 2 177 382 B1**
(45) Veröffentlichungstag und Bekanntmachung des Hinweises auf die Patenterteilung: **22.01.2014**
(21) Anmeldenummer: 09009463.2
(22) Anmeldetag: 22.07.2009
(51) Int. Cl.: B60G 17/052

(54) **Ventilanordnung mit einem ersten und einem zweiten Sitzventil sowie Ventileinrichtung mit einer solchen Ventilanordnung**
Valve assembly with a primary and secondary seat valve and valve device with such a valve assembly
Agencement de clapet doté d'une première et d'une deuxième soupape à siège, ainsi qu'un dispositif de clapet doté d'un tel agencement de clapet

(30) Priorität: 14.10.2008 DE 102008051206
(43) Veröffentlichungstag der Anmeldung: 21.04.2010
(73) Patentinhaber: WABCO GmbH, 30453 Hannover (DE)
(72) Erfinder: Gorczyca, Sven, 30419 Hannover (DE); Risse, Rainer, 30982 Pattensen-Reden (DE); Stender, Axel, 31787 Hameln (DE); Weihe, Ulrich, 30826 Garbsen (DE)
(74) Vertreter: Lauerwald, Jörg

(56) Entgegenhaltungen:
- EP-A- 0 088 881
- EP-A- 1 382 469
- EP-A- 1 653 132
- DE-A1- 2 013 302
- DE-B3-102005 017 590
- GB-A- 838 810
- JP-A- 58 166 178
- US-A1- 2005 109 407

## Beschreibung

Die Erfindung betrifft eine Ventilanordnung für eine Luftfederungsanlage in einem Fahrzeug mit einem ersten und einem zweiten Sitzventil gemäß den Merkmalen des Patentanspruchs 1. Ferner betrifft die Erfindung eine Ventileinrichtung in der die erfindungsgemäße Ventilanordnung verwendet wird, gemäß den Merkmalen des Patentanspruchs 12.

Bei manchen Ventil-Anwendungen besteht Bedarf daran, das Ventil über verschiedene Betätigungsarten und -energien zu betätigen. So ist beispielsweise aus der DE 102 32 554 B4 eine Ventileinrichtung für eine Luftfederungsanlage in einem Fahrzeug bekannt, bei der ein Sitzventil wahlweise durch einen manuellen Bedienknopf oder einen Elektromagneten betätigbar ist. Bei der dortigen Ventilanordnung erfolgt eine Betätigung durch den Elektromagneten auf direkte Weise, indem dieser mechanisch mit dem Ventilschließglied des Sitzventils verbunden ist. Aufgrund der direkten Betätigung können dort nur kleine Strömungsquerschnitte realisiert werden.

EP 0 088 881 A1 offenbart ein Doppelsitzventil, mit einem beweglichen Ventilstössel, auf dem zwei Ventilteller starr befestigt sind, die mit zwei ortsfesten Ventilsitzen zwei Ventile bilden, wobei die Gefahr besteht, dass in der Mittelstellung des Ventilstössels nicht wie erforderlich beide Ventile geschlossen sind. Um diesen Nachteil zu vermeiden, ist auf den beiden Ventiltellern je ein Ring verschiebbar angeordnet, zwischen denen sich eine Schraubenfeder befindet, welche dafür sorgt, dass in der Mittelstellung des Ventilstössels beide Ventile geschlossen sind.

Die Aufgabe der Erfindung besteht darin, eine Ventilanordnung anzugeben, die durch verschiedene Betätigungsarten betätigbar ist und größere Strömungsquerschnitte erlaubt.

Diese Aufgabe wird durch die in dem Patentanspruch 1 angegebene Ventilanordnung gelöst. Eine vorteilhafte Anwendung der Erfindung gemäß Patentanspruch 1 ist in dem Patentanspruch 12 angegeben. In den Unteransprüchen sind weitere vorteilhafte Ausgestaltungen der Erfindung angegeben.

Sofern im Rahmen dieser Anmeldung von Elementen wie z.B. einem Luftfederbalg, einem Druckluftanschluss oder einer Druckluftleitung in der Einzahl gesprochen wird, schließt dies eine Mehrzahl solcher Elemente mit ein, wie z.B. eine Anordnung von Luftfederbälgen, Druckluftanschlüssen oder Druckluftleitungen.

Ein Vorteil der erfindungsgemäßen Ventilanordnung besteht darin, dass sie einen relativ einfachen Aufbau mit wenigen Bauteilen aufweist und daher kostengünstig realisiert werden kann. Zudem kann bei gleichzeitig relativ kompaktem Aufbau der Ventilanordnung ein großer Strömungsquerschnitt realisiert werden. Insbesondere durch Verwendung nur einer gemeinsamen Feder, die zwei Sitzventile in einer vorbestimmten Position hält, ist ein kompakter Aufbau mit relativ wenigen Bauteilen möglich. Durch die Verwendung zweier voneinander unabhängiger Sitzventile kann auf einfache Weise eine doppelte, voneinander unabhängige Betätigungsmöglichkeit der Sitzventile bei zugleich großen Strömungsquerschnitten vorgesehen werden.

Die gemeinsame Feder kann unterschiedlich ausgelegt sein. So ist es möglich, dass die Feder die Ventilschließkörper in einer geöffneten, einer geschlossenen oder irgendeiner anderen Position hält. Gegenüber dieser Position können die Ventilschließkörper dann durch eine Betätigung ausgelenkt werden.

Gemäß einer vorteilhaften Ausgestaltung der Erfindung ist die Ventilanordnung derart ausgebildet, dass die Längsachsen der Ventilschließkörper im Wesentlichen miteinander fluchten. Hierdurch kann eine kompakte Ventilanordnung realisiert werden, bei der die Ventilschließkörper sozusagen "Rücken an Rücken" angeordnet sind und die gemeinsame Feder ohne Versatz dazwischen angeordnet ist.

Zur Betätigung der Ventilschließkörper der Ventilanordnung sind verschiedene Betätigungsarten vorteilhaft anwendbar, zum Beispiel eine manuelle Betätigung über einen Stößel, eine direkte Betätigung über einen Elektromagneten, zum Beispiel mittels eines Stößels, oder eine indirekte Betätigung über einen Druckluft betätigbaren Kolben, der beispielsweise über ein elektropneumatisches Magnetventil mit Druckluft beaufschlagbar ist.

Eine vorteilhafte Ausgestaltung der Erfindung betrifft eine Ventileinrichtung für eine Luftfederungsanlage in einem Fahrzeug, bei der wenigstens eine erfindungsgemäße Ventilanordnung verwendet wird.

Gemäß einer vorteilhaften Ausgestaltung einer derartigen Ventileinrichtung sind wenigstens zwei Ventilanordnungen vorgesehen. Die manuelle Betätigungseinrichtung weist eine Achse auf, die über Nocken auf die Ventilschließkörper des jeweiligen ersten Sitzventils einwirkt und bei deren Betätigung die Ventilschließkörper von der vorbestimmten Position in eine andere Position bewegt werden. Es ist zudem vorteilhaft, die Achse im Wesentlichen zentral zwischen den Ventilanordnungen anzuordnen. Weiterhin ist es vorteilhaft, die druckluftbetätigbaren Betätigungskolben der Betätigungseinrichtung auf den der Achse abgewandten Seiten der Ventilanordnungen anzuordnen. Hierdurch ist ein relativ kompakter Aufbau der Ventileinrichtung mit wenigen Einzelteilen möglich.

Die Erfindung wird nachfolgend anhand von Ausführungsbeispielen unter Verwendung von Zeichnungen näher erläutert.

Es zeigen
- Fig. 1: eine zweikreisige Luftfederungsanlage in schematischer Darstellung unter Verwendung der erfindungsgemäßen Ventileinrichtung und
- Fig. 2: die erfindungsgemäße Ventilanordnung in Schnittdarstellung und
- Fig. 3 bis 7: verschiedene Ausführungsformen der erfindungsgemäßen Ventileinrichtung in Schnittdarstellung.

In den Figuren werden gleiche Bezugszeichen für einander entsprechende Teile verwendet.

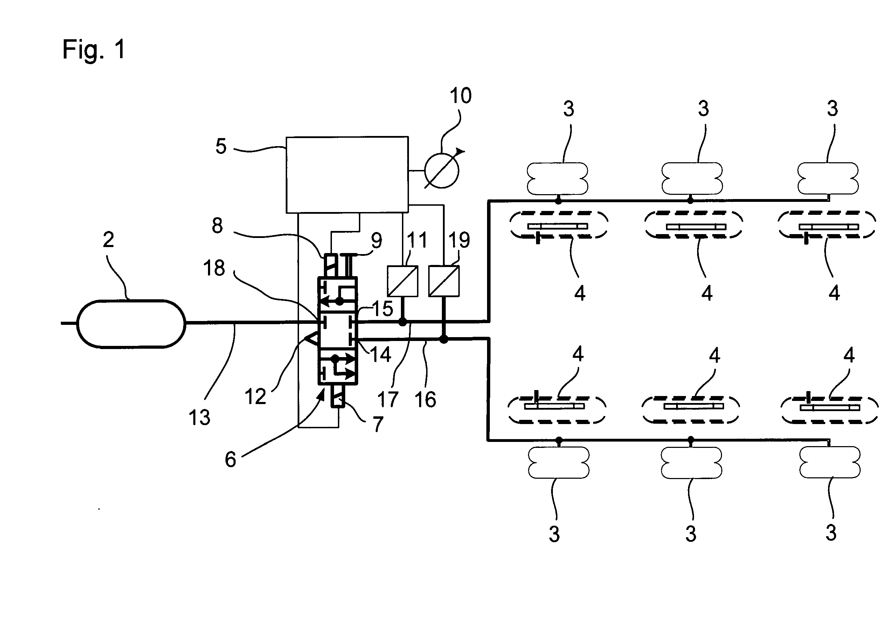

Fig. 1 zeigt in schematischer Darstellung den Aufbau einer zweikreisigen Luftfederungsanlage in einem dreiachsigen Fahrzeug. Das Fahrzeug weist Räder (4) auf, die paarweise an jeweiligen Fahrzeugachsen angeordnet sind. Der Fahrzeugaufbau ist über Luftfederbälge (3) gegenüber den Fahrzeugachsen gefedert. Die Luftfederbälge (3) sind jeweils in der Nähe der Radaufhängung der Räder (4) angeordnet. Über die Luftfederbälge (3) kann die Niveaulage des Fahrzeugaufbaus gegenüber den Rädern (4) in bestimmten Grenzen verändert werden. Die Luftfederungsanlage gemäß Fig. 1 ist zweikreisig ausgebildet, d.h. sie weist einen Druckluftkreis für die rechte Fahrzeugseite und einen weiteren Druckluftkreis für die linke Fahrzeugseite auf. Die Druckluftkreise weisen je drei Luftfederbälge (3) auf, die an jeweilige pneumatische Leitungen (16, 17) angeschlossen sind. Die Leitungen (16, 17) sind mit pneumatischen Anschlüssen (14, 15) einer Ventileinrichtung (6) der erfindungsgemäßen Art verbunden. Ein pneumatischer Anschluss (18) der Ventileinrichtung (6) ist wiederum über eine pneumatische Leitung (13) mit einem Druckluftvorrat verbunden. Der Druckluftvorrat ist im Ausführungsbeispiel der Fig. 1 als Druckluft-Vorratsbehälter (2) dargestellt. Bei Fahrzeugen mit eigener Druckluftversorgung ist der Druckluft-Vorratsbehälter (2) üblicherweise noch mit der Druckluftversorgungsanlage, d. h. mit einem Kompressor, einem Lufttrockner und einem Mehrkreisschutzventil, verbunden.

Die Ventileinrichtung (6) weist ferner einen Entlüftungsanschluss (12) auf, über den Druckluft in die Atmosphäre entlassen werden kann.

Die Ausführung der Luftfederungsanlage als zweikreisige Anlage hat den Vorteil, dass die Wankstabilität des Fahrzeugs erhöht werden kann, da Ausgleichsströmungen der Druckluft zwischen der linken und der rechten Fahrzeugseite verhindert werden.

Die Ventileinrichtung (6) ist durch elektrische Betätigungssignale über Magnetventile (7, 8) betätigbar. Zusätzlich ist die Ventileinrichtung (6) über ein manuelles Bedienelement (9) betätigbar. Die Magnetventile (7, 8) sind über elektrische Leitungen mit einer elektronischen Steuereinrichtung (5) verbunden.

Die elektronische Steuereinrichtung (5) dient zur automatischen, elektronisch gesteuerten Niveauregelung des Fahrzeugaufbaus. Zu diesem Zweck ist an die elektronische Steuereinrichtung (5) ein Wegsensor (10) angeschlossen, der üblicherweise am Fahrzeugrahmen, der Teil des Fahrzeugaufbaus ist, montiert ist und über einen mechanischen Sensierarm den jeweiligen Abstand zum Fahrwerk, d. h. zu den Achsen des Fahrzeugs, sensiert. Des Weiteren sind zwei Drucksensoren (11, 19) mit der elektronischen Steuereinrichtung (5) verbunden. Die Drucksensoren (11, 19) sind pneumatisch mit den Leitungen (16, 17) verbunden und sensieren den Druck in den zwei Druckluftkreisen der Luftfederungsanlage. Die Sensoren (10, 11, 19) geben die sensierten Informationen als elektrische Signale an die elektronische Steuereinrichtung (5) ab, die diese Signale verarbeitet und hieraus gemäß vorgegebenen Algorithmen entsprechende Ansteuersignale für die Magnetventile (7, 8) erzeugt.

Die elektronische Steuereinrichtung (5) kann beispielsweise ein ABS- (Anti-Blockier-System) oder EBS- (Elektronisch gesteuertes Bremssystem) Steuergerät sein. Das Steuergerät (5) ist dann über elektrische Leitungen mit Drehgeschwindigkeitssensoren verbunden, die in der Nähe der Räder (4) angeordnet sind und die Drehgeschwindigkeiten der Räder (4) erfassen. Das Steuergerät (5) wertet diese Drehgeschwindigkeitssignale aus.

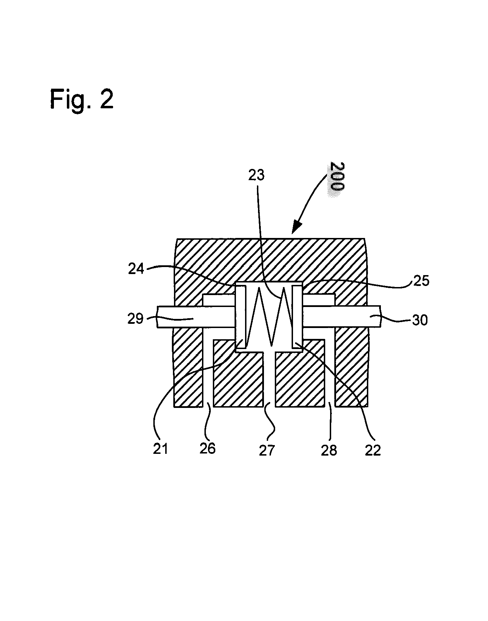

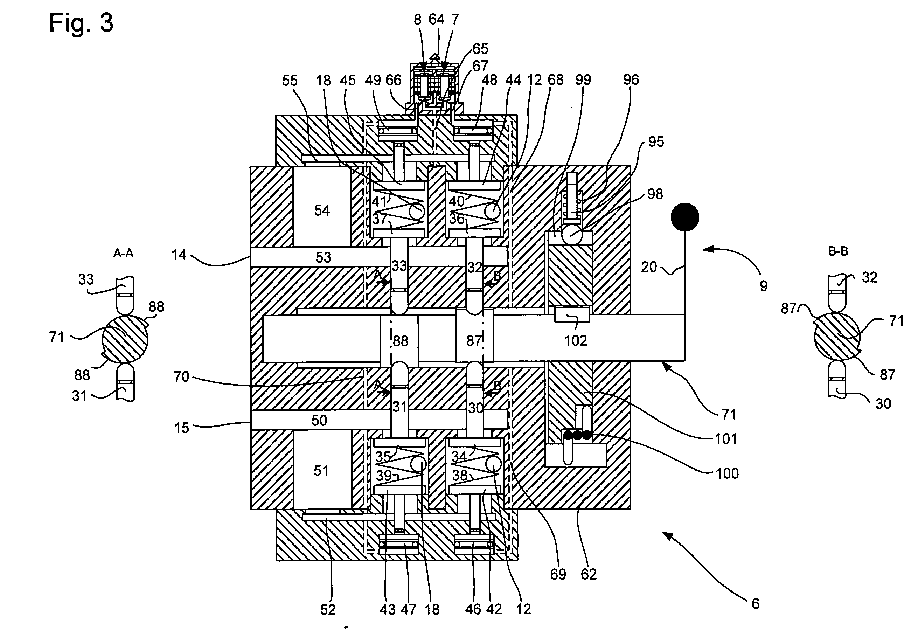

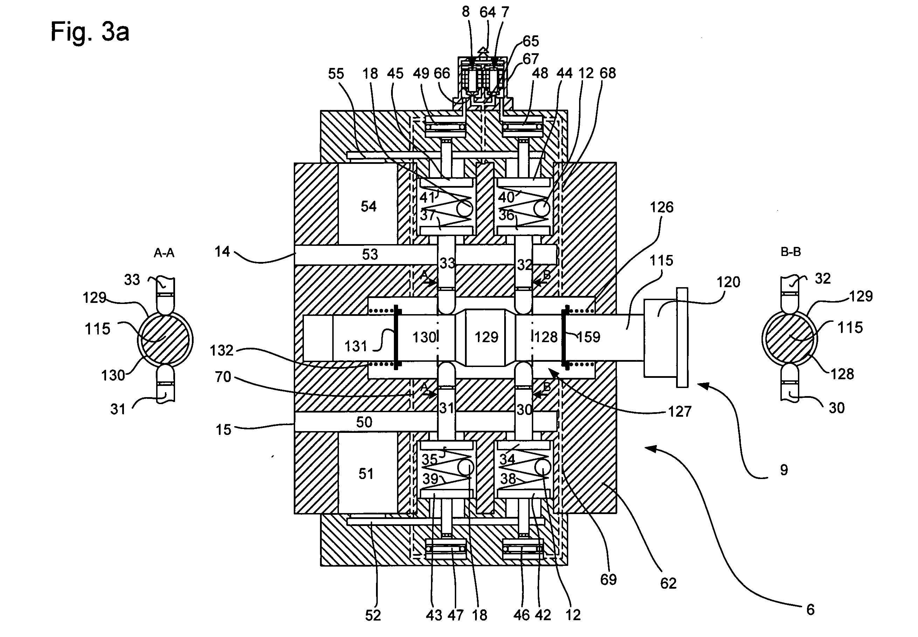

Die Ventileinrichtung (6) dient einerseits zur Regelung und Konstanthaltung des Fahrzeugniveaus im Rahmen der elektronischen Niveauregelung durch die elektronische Steuereinrichtung (5). Die Ventileinrichtung (6) dient außerdem einer manuellen Veränderung der Niveaulage des Fahrzeugs, die von der durch die elektronische Steuereinrichtung (5) vorgegebenen Soll-Niveaulage abweicht. Eine solche manuelle Veränderung ist beispielsweise beim Be- oder Entladen des Fahrzeuges an einer Laderampe erforderlich. Für die manuelle Veränderung der Niveaulage ist an der Ventileinrichtung (6) ein Bedienelement (9) vorgesehen. Das Bedienelement (9) kann beispielsweise als Betätigungshebel einer Ventileinrichtung mit Drehbetätigung (gemäß Fig. 3) oder als Bedienknopf (gemäß Fig. 2) ausgestaltet sein. Das Bedienelement (9) gemäß Fig. 1 symbolisiert daher alle Arten manueller Bedienelemente.

Die Ventileinrichtung (6) kann manuell und mittels elektrischer Betätigung in die Stellungen Heben, Senken und Neutral gestellt werden. Mit dem Begriff "Stellung" wird im Rahmen dieser Patentanmeldung die Stellung, d.h. die Funktion, der Ventileinrichtung (6) bezeichnet. Mit der eingestellten Position des Bedienelements (9) korrespondieren bestimmte Stellungen der Ventileinrichtung (6), wobei je nach Ausführungsart für das Bedienelement (9) bestimmte weitere Positionen vorgesehen sein können.

In der Stellung Heben wird Druck aus dem Druckluft-Vorratsbehälter (2) in die Luftfederbälge (3) geleitet. In der Stellung Senken (18) wird Luft aus den Luftfederbälgen (3) über den Entlüftungsanschluß (12) in die Atmosphäre entlassen. In der Stellung Neutral (19) erfolgt keine Änderung der Druckluftmenge in den Luftfederbälgen (3).

In der Fig. 2 ist eine vorteilhafte Ausführungsform der Erfindung schematisch in Schnittdarstellung gezeigt. Eine Ventilanordnung (200) weist ein erstes Sitzventil (21, 24) sowie ein zweites Sitzventil (22, 25) auf. Die Sitzventile sind vorteilhaft als Plattenventile ausgebildet. Das erste Sitzventil weist einen durch eine Gehäusekante gebildeten Ventilsitz (24) sowie einen als Ventilplatte ausgebildeten Ventilschließkörper (21) auf. Analog dazu weist das zweite Sitzventil einen von einer weiteren Gehäusekante (25) gebildeten Ventilsitz (25) sowie einen in Plattenform ausgebildeten Ventilschließkörper (22) auf. Die Längsachsen der Ventilschließkörper (21, 22) fluchten im Wesentlichen miteinander.

In der in der Fig. 2 dargestellten Position sind das erste und das zweite Sitzventil geschlossen. Zwischen der dem Ventilsitz (24) abgewandten Seite des Ventilschließkörpers (21) und der dem Ventilsitz (25) abgewandten Seite des Ventilschließkörpers (22) ist eine gemeinsame Feder (23) angeordnet, die im vorliegenden Ausführungsbeispiel als Druckfeder ausgebildet ist und infolge einer Vorspannung eine Kraft auf die Ventilschließkörper (21, 22) in Schließrichtung ausübt.

Die Ventilanordnung weist als mechanische Betätigungseinrichtung einen ersten Stößel (29) sowie einen zweiten Stößel (30) auf. Das erste Sitzventil (21, 24) kann durch den mit dem Ventilschließkörper (21) mechanisch gekoppelten ersten Stößel (29) in eine geöffnete Position bewegt werden, in der das Sitzventil einen Druckmittelfluss zwischen Druckmittelkanälen (26, 27) freigibt. Der erste Stößel (29) kann beispielsweise manuell, pneumatisch über einen Kolben, direkt über einen Elektromagneten oder elektropneumatisch über ein Magnetventil betätigt werden. Analog dazu ist das zweite Sitzventil (22, 25) über einen zweiten Stößel (30) in die geöffnete Stellung stellbar, in der es einen Druckmittelfluss zwischen Druckmittelleitungen (27, 28) freigibt. Der zweite Stößel (30) kann in vergleichbarer Weise wie der erste Stößel (29) betätigt werden.

In der Fig. 3 ist eine erfindungsgemäße Ventileinrichtung (6) für eine Luftfederungsanlage der anhand der Fig. 1 beschriebenen Art dargestellt. In der Ventileinrichtung (6) kommt die anhand der Fig. 2 beschriebene Ventilanordnung vierfach zum Einsatz. Eine erste Verwendung der Ventilanordnung weist Ventilschließkörper (34, 42), eine Feder (38) sowie einen Stößel (30) auf. Eine zweite Verwendung der Ventilanordnung weist Ventilschließglieder (35, 43), eine Feder (39) sowie einen Stößel (31) auf. Eine dritte Verwendung der Ventilanordnung weist Ventilschließkörper (36, 44), eine Feder (40) sowie einen Stößel (32) auf. Eine vierte Verwendung der Ventilanordnung weist Ventilschließkörper (37, 45), eine Feder (41) sowie einen Stößel (33) auf. In der ersten Verwendung ist der Ventilschließkörper (42) über einen mit Druckluft beaufschlagbaren Kolben (46) über einen Stößel betätigbar. Der Ventilschließkörper (43) in der zweiten Verwendung ist über einen Druckluft betätigbaren Kolben (47) betätigbar. Der Ventilschließkörper (44) in der dritten Verwendung ist über einen Kolben (48) betätigbar. Der Ventilschließkörper (45) in der vierten Verwendung ist mittels eines Druckluft betätigbaren Kolbens (49) über einen Stößel betätigbar.

Die Kolben (46, 48) sind über Druckluftkanäle (67, 69) mit dem Magnetventil (7) verbunden. Das Magnetventil (7) ist als elektromagnetisch betätigbares 3/2-Wege-Pneumatikventil ausgebildet. Je nach Schaltstellung lässt es über einen Druckluftkanal (65) Druckluft aus dem Vorratsbehälter (2) in die Druckluftkanäle (67, 69) strömen, was eine Druckluftbetätigung der Kolben (46, 48) und infolge dessen ein Öffnen der Ventilschließkörper (42, 44) zur Folge hat. In seiner zweiten Stellung verbindet das Ventil (7) die Druckluftkanäle (67, 69) mit einem Entlüftungsanschluss (64). In dieser Stellung wird eine etwaige Druckluftbeaufschlagung der Kolben (46, 48) aufgehoben und infolge dessen aufgrund der Rückstellkraft der Federn (38, 40) die Ventilschließkörper (42, 44) gegen ihre jeweiligen Ventilsitze gepresst, sodass die Sitzventile in der geschlossenen Position sind.

Die Kolben (47, 49) sind über Druckluftkanäle (66, 67, 70) mit dem Magnetventil (8) verbunden. Das Magnetventil (8) ist als elektromagnetisch betätigbares 3/2-Wege-Pneumatikventil ausgebildet und erfüllt die gleiche Funktion wie das Magnetventil (7), nur im Bezug auf die Kolben (47, 49).

Die Ventilschließkörper (36, 44, 37, 45) sind über Druckmittelkanäle (53, 54, 55) an ihrer dem jeweiligen Ventilsitz zugewandten Seite mit dem Anschluss (14) der Ventileinrichtung (6) verbunden. Die zwischen den Ventilplatten (36, 44) vorgesehene Kammer ist über einen Druckluftkanal (68) mit dem EntlüftungsAnschluss (12) der Ventileinrichtung (6) verbunden. Die zwischen den Ventilschließkörpern (37, 45) gebildete Kammer ist mit dem Druckluft-Anschluss (18) der Ventileinrichtung (6) verbunden. Ein Öffnen eines der Ventilschließkörper (36, 44) bewirkt einen Druckmittelabfluss aus den Luftfederbälgen (3) des einen Druckluftkreis-Anschlusses (14) über den Anschluss (12) in die Atmosphäre. Ein Öffnen eines der Ventilschließkörper (37, 45) bewirkt einen Druckluftzufluss in die Luftfederbälge (3) des Druckluftkreis-Anschlusses (14) aus dem Druckluft-Vorratsbehälter (2).

Die den Ventilsitzen zugewandten Seiten der Ventilschließkörper (34, 42, 35, 43) sind über Druckluftkanäle (50, 51, 52) mit dem Balganschluss (15) der Ventileinrichtung (6) verbunden. Die zwischen den Ventilschließkörpern (34, 42) gebildete Kammer ist über in der Ventileinrichtung (6) vorgesehene Druckmittelkanäle mit dem Entlüftungsanschluss (12) der Ventileinrichtung (6) verbunden. Die zwischen den Ventilschließkörpern (35, 43) gebildete Kammer ist über weitere Druckmittelkanäle mit dem Druckmittel-Vorratsanschluss (18) der Ventileinrichtung (6) verbunden. Ein Öffnen eines der Ventilschließkörper (34, 42) bewirkt eine Druckverminderung, der mit dem Anschluss (15) verbundenen Luftfederbälge infolge eines Abflusses der Druckluft über den Entlüftungsanschluss (12) in die Atmosphäre. Analog dazu bewirkt ein Öffnen eines Ventilschließkörper (35, 43) eine Druckerhöhung in den mit dem Anschluss (15) verbundenen Luftfederbälgen über den Druckluft-Anschluss (18) von dem Druckluft-Vorrat (2). Bei einer elektrischen Betätigung der Ventileinrichtung (6) dient das Magnetventil (8) als Einlassventil, d. h. eine Betätigung des Magnetventils (8) führt zu einer Druckerhöhung in den Druckluftleitungen (14, 15) bzw. (16, 17) der Fig.1. Das Magnetventil (7) dient als Auslassventil. Seine Betätigung führt zur Druckverminderung an den Anschlüssen (14, 15) bzw. in den Druckluftleitungen (16, 17) der Fig.1.

Die Ventileinrichtung (6) weist ferner ein manuelles Bedienelement (9) auf, das einen Bedienhebel (20) umfasst. Der Bedienhebel (20) ist mit einer in einer Bohrung der Ventileinrichtung (6) angeordneten Achse (71) drehfest verbunden. Die Achse (71) steht über eine Passfeder (102) mit einer federbetätigten Rückstelleinrichtung drehfest in Verbindung. Die Rückstelleinrichtung weist eine Scheibe (101) auf, die mit einer Feder (100) in Eingriff steht. Die Feder (100) ist an ihrem anderen Ende mit dem Gehäuse (62) der Ventileinrichtung (6) verbunden. Die Rückstelleinrichtung (101, 100) bewirkt eine automatische Rückstellung des manuellen Bedienelements (9) in eine Neutrallage, in der die Ventileinrichtung (6) die Stellung Neutral (19) einnimmt.

Die Achse (71) weist Nocken (87, 88) auf, mittels denen bei entsprechender Betätigung des manuellen Bedienelements (9) wahlweise die Stößel (33, 31) oder die Stößel (32, 30) betätigbar sind. Durch eine Betätigung der Stößel (33, 31) vom Nocken (88) werden die Ventilschließkörper (37, 35) in die geöffnete Position verbracht. Hierdurch werden die mit den Anschlüssen (14, 15) verbundenen Luftfederbälge mit Druckluft-Vorrat bzw. dem Anschluss (18) verbunden, was zu einem Erhöhen des Fahrzeugaufbaus führt. In einer gegenüberliegenden Stellung werden durch die Nocken (87) die Stößel (32, 30) betätigt. Hierdurch öffnen sich die Ventilschließkörper (36, 34) und geben die Druckmittelkanäle zu den Luftfederbälgen zur Atmosphäre bzw. dem Anschluss (12) frei. Hierdurch wird der Aufbau des Fahrzeugs abgesenkt. Die exzentrische Ausbildung der Nocken (87,88) ist in den Schnittdarstellungen A-A und B-B ersichtlich, worin sich der bei Drehbewegung der Achse (71) vergrößernde Durchmesser der Nocken (87, 88) zur Betätigung der Stößel (31, 33) bzw. (30, 32) deutlich zeigt.

Wie erkennbar ist, kann sowohl durch eine manuelle Betätigung über das manuelle Bedienelement (9) wie auch durch die Betätigung über die eine Betätigungseinheit bildenden Magnetventile (7, 8) ein Heben und Senken des Fahrzeugaufbaus bewirkt werden. Das manuelle Bedienelement (9) kann die Stellungen Heben, Senken und Neutral einnehmen.

Des Weiteren ist eine Rasteinrichtung (90) vorgesehen, die ein Einrasten der Achse (71) und damit des manuellen Bedienelements (9) in vorbestimmten Positionen erlaubt. Die Rasteinrichtung (90) weist eine Rastkugel (98) auf, die in einer Nut (99) der Scheibe (101) zur Anlage gebracht wird. In Folge des Einrastens der Rastkugel (98) in der Nut (99) wird eine Drehbewegung der Achse (71) verhindert.

Die Rastkugel (98) ist auf der der Nut (99) abgewandeten Seite von einem Druckstempel (95), der durch eine Feder (96) gegenüber der Rastkugel (98) vorgespannt ist, beauftschlagt. Die Haltekraft der Rasteinrichtung (90) ist durch geeignete Abstimmung der Feder (96), der Formgebung der Nut (99) sowie der Feder (100) der Rückstelleinrichtung derart dimensioniert, dass das manuelle Bedienelement (9) im praktischen Betrieb der Ventileinrichtung (6) sicher in der eingerasteten Stellung gehalten wird, andererseits die Rastierung aber durch manuelle Betätigung des Bedienelements (9) mit etwas erhöhtem Kraftaufwand überwindbar ist, so dass das Bedienelement (9) in die anderen Betriebsstellungen stellbar ist. Hierdurch kann die Rastwirkung der Rasteinrichtung (90) aufgehoben werden und die Achse (71) gegenüber Drehbewegung freigegeben werden.

In der Fig. 3a ist eine weitere Ausführungsform der erfindungsgemäßen Ventileinrichtung (6) beschrieben. Nachfolgend werden nur die gegenüber der Fig. 3 geänderten Bestandteile der Ventileinrichtung beschrieben.

Das manuelle Bedienelement 9 ist in diesem Beispiel nicht drehbar sondern in Achsrichtung verschiebbar angeordnet. Im Gegensatz zur Achse (71) der Fig.3 ist die Stange 115 von dem Bedienelement 120 in axialer Richtung verschiebbar. Dies kann sowohl durch manuelle Druck- oder Zug-Betätigung erfolgen. Es ist auch möglich die Betätigung elektrisch oder elektro-pneumatisch auszuführen. Die Stange 115 wird von einer erste Feder 126 und einer zweiten Feder 132 in einer neutralen Stellung bzw. Nullstellung gehalten. Dazu stützt sich die erste Feder 126 einerseits an dem Gehäuse 62 und andererseits an einem mit der Stange 115 in Verbindung stehenden Haltering 159 ab. Die zweite Feder 132 stützt sich einerseits an dem Gehäuse 62 und andererseits an einem mit der Stange 115 in Verbindung stehenden Haltering 131 ab. Die Stange 115 weist ferner einen ersten zylindrischen Abschnitt 128, einen zweiten zylindrischen Abschnitt 129 und einen dritten zylindrischen Abschnitt 130 auf. Der erste zylindrische Abschnitt 128 steht über eine erste Abschrägung mit dem zweiten zylindrischen Abschnitt 129 und der dritte zylindrische Abschnitt 128 steht über eine zweite Abschrägung mit dem zweiten zylindrischen Abschnitt 129 in Verbindung.

In der Nullstellung stützt sich das eine Ende der Stößel 30, 32 an dem ersten zylindrischen Abschnitt 128 und das eine Ende der Stößel 31, 33 an dem dritten zylindrischen Abschnitt 130 der Stange 115 ab. Wird die Stange 115 durch das Bedienelement 120 axial in Richtung des Gehäuses 62 gedrückt, dann werden die Stößel 31, 33 über die zweite Abschrägung von der Abstützung an dem zweiten Abschnitt 129, welcher einen größeren Durchmesser aufweist, ausgelenkt und die entsprechenden Ventilschließkörper 35, 37 öffnen, um die in Fig.3 erläuterte Funktion auszulösen. Durch die auf Zug gespannte erste Feder 126 und die auf Druck gespannte zweite Feder 132 wird die Stange 115 nach der Beendigung der Betätigung des Bedienelementes 120 bzw. dem Loslassen dieses in die Nullstellung zurückgebracht, so dass sich die Stößel 31, 33 wieder auf dem dritten zylindrischen Abschnitt 130 abstützen und die Ventilschließkörper 35, 37 geschlossen sind. Der größere Durchmesser des zweiten zylindrischen Abschnitts 129 gegenüber dem dritten zylindrischen Abschnitt 130 wird in der Schnittdarstellung A-A besonders deutlich.

Wird die Stange 115 durch das Bedienelement 120 axial von dem des Gehäuses 62 wegbewegt (Zugbeanspruchung), dann werden die Stößel 30, 32 über die erste Abschrägung von der Abstützung an dem zweiten Abschnitt 129, welcher einen größeren Durchmesser aufweist, ausgelenkt und die entsprechenden Ventilschließkörper 34, 36 öffnen, um die in Fig.3 erläuterte Funktion auszulösen. Durch die auf Druck gespannte erste Feder 126 und die auf Zug gespannte zweite Feder 132 wird die Stange 115 nach der Beendigung der Betätigung des Bedienelementes 120 bzw. dem Loslassen dieses in die Nullstellung zurückgebracht, so dass sich die Stößel 30, 32 wieder auf dem ersten zylindrischen Abschnitt 128 abstützen und die Ventilschließkörper 34, 36 geschlossen sind. Der größere Durchmesser des zweiten zylindrischen Abschnitts 129 gegenüber dem ersten zylindrischen Abschnitt 128 wird in der Schnittdarstellung A-A besonders deutlich.

Es ist auch möglich die Stange 115 gegenüber dem Gehäuse 62 mit einer Rasteinrichtung in den zu den ersten, zweiten und dritten Abschnitten korrespondierenden Stellungen Heben, Senken und/oder Nullstellung zu fixieren. Die Rasteinrichtung kann manuell, pneumatisch, elektrisch und/oder elektro-pneumatisch betätigbar und/oder lösbar ausgestaltet sein.

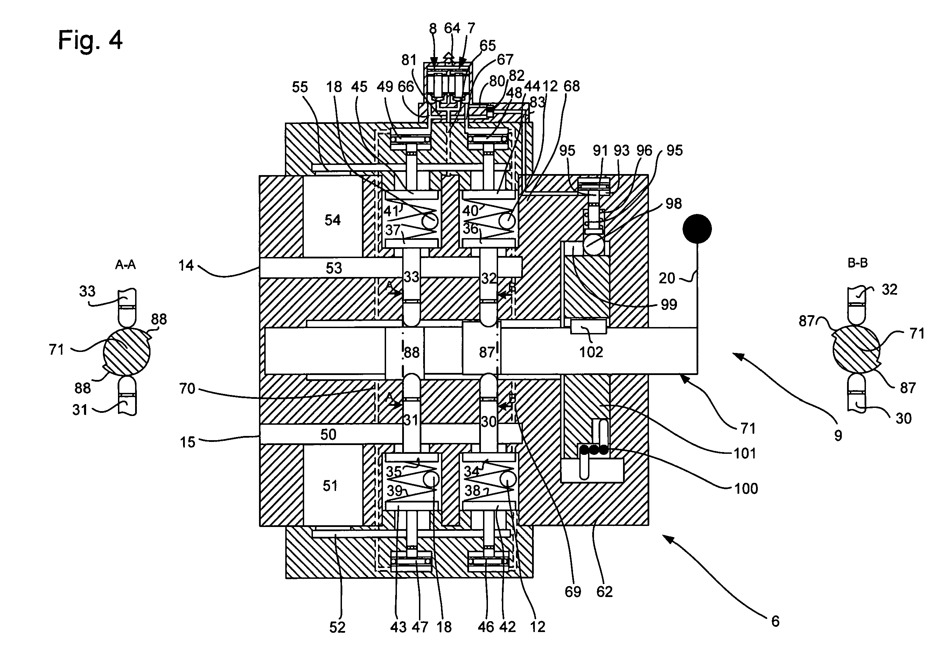

In der Fig. 4 ist eine weitere Ausführungsform der erfindungsgemäßen Ventileinrichtung (6) beschrieben. Nachfolgend werden nur die gegenüber der Fig. 3 geänderten Bestandteile der Ventileinrichtung beschrieben.

Gemäß Fig. 4 ist eine Rasteinrichtung (90) vorgesehen, die ein Einrasten der Achse (71) und damit des manuellen Bedienelements (9) in vorbestimmten Positionen erlaubt. Die Rasteinrichtung (90) weist eine Rastkugel (98) auf, die in einer Nut (99) der Scheibe (101) zur Anlage gebracht wird. In Folge des Einrastens der Rastkugel (98) in der Nut (99) wird eine Drehbewegung der Achse (71) verhindert.

Die Rastkugel (98) ist auf der der Nut (99) abgewandeten Seite von einem Druckstempel (95), der durch eine Feder (96) gegenüber der Rastkugel (98) vorgespannt ist, beauftschlagt. Der Stempel (95) ist auf der Rastkugel (98) abgewandten Seite mit einem Druckluft beaufschlagbaren Kolben (91) verbunden. Eine Druckluftbeaufschlagung des Kolbens (91) bewirkt eine Bewegung des Stempels (95) von der Rastkugel (98) weg, entgegen der Kraft der Feder (96). Hierdurch kann die Rastwirkung der Rasteinrichtung (90) aufgehoben werden und die Achse (71) gegenüber Drehbewegung freigegeben werden.

Die zur Druckluftbeaufschlagung des Kolbens (91) dienende Kammer ist über einen Druckluftkanal (83) mit einem Doppelrückschlagventil (82) verbunden. Das Doppelrückschlagventil (82) ist wiederum über Druckluftkanäle (80, 81) mit den Druckluftkanälen (66, 67) der Magnetventile (7, 8) derart verbunden, dass bei einer Betätigung eines der Magnetventile (7, 8) der Kolben (91) mit Druckluft beaufschlagt wird und demzufolge die Rastwirkung der Rasteinrichtung (90) aufhebt. Über das Doppelrückschlagventil (82) wird eine Aufhebung der Rastwirkung der Rasteinrichtung (90) ermöglicht, wenn wenigstens eines der beiden Magnetventile (7, 8) betätigt ist.

Dies hat den Vorteil, dass eine Kopplung der Betätigungseinheiten (7, 8) vermieden wird. Als Kopplung wird in diesem Zusammenhang verstanden, dass über das eine Betätigungselement die Funktion "Heben" gewünscht wird und gleichzeitig das andere Betätigungselement durch die pneumatische Verbindung mitgesteuert wird.

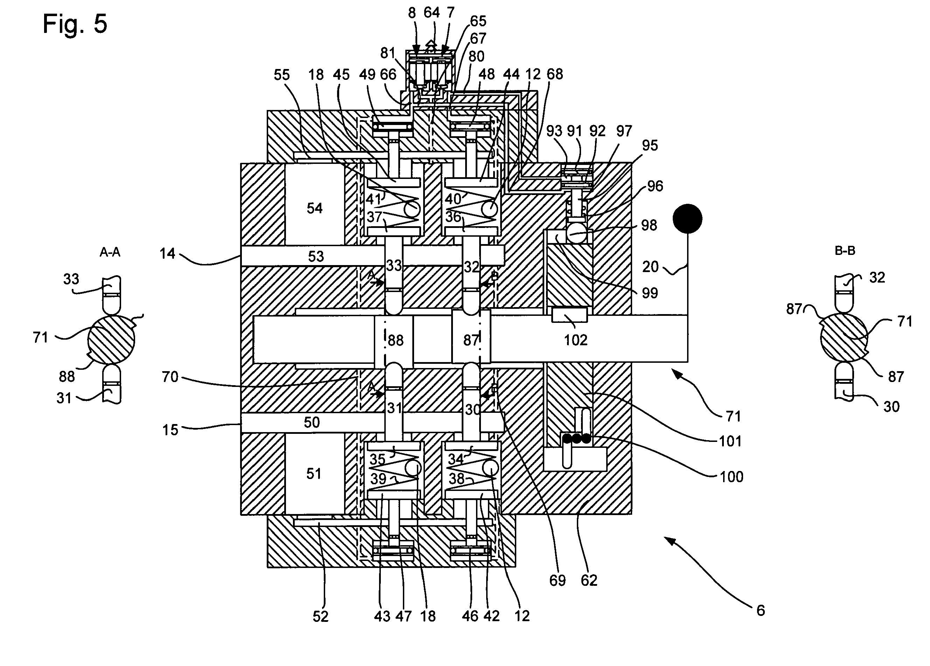

Die Fig. 5 zeigt eine weitere Ausführungsform der erfindungsgemäßen Ventileinrichtung (6). Im Vergleich zur Fig. 4 ist hier zur Entriegelung der Rasteinrichtung (90) eine Anordnung von zwei Kolben (91, 92) vorgesehen, die über jeweilige Druckmittelkammern mit Druckluft betätigbar sind. Die Druckmittelkammern der Kolben (91, 92) stehen über Druckmittelkanäle (80, 81) mit den Magnetventilen (7, 8) pneumatisch in Verbindung. Eine Betätigung des Magnetventils (7) bewirkt eine Druckbeaufschlagung des Kolbens (91). Eine Betätigung des Magnetventils (8) bewirkt eine Druckbeaufschlagung des Kolbens (92). Beide Kolben (91, 92) sind mit dem Stempel (95) sowie miteinander verbunden. Durch die Verwendung zweier miteinander verbundener Kolben (91, 92), die beide auf den Stempel (95) wirken, ist eine Entkopplung der Druckluftkreise der Magnetventile (7, 8) möglich, ohne dass ein Doppelrückschlagventil gemäß Fig. 4 erforderlich ist. Auf diese Weise kann mit geringerem Aufwand, nämlich unter Vermeidung des Doppelrückschlagventils (82), die Funktion realisiert werden, dass bereits bei Betätigung eines der Magnetventile (7, 8) eine Aufhebung der Rastwirkung der Rasteinrichtung (90) erfolgt.

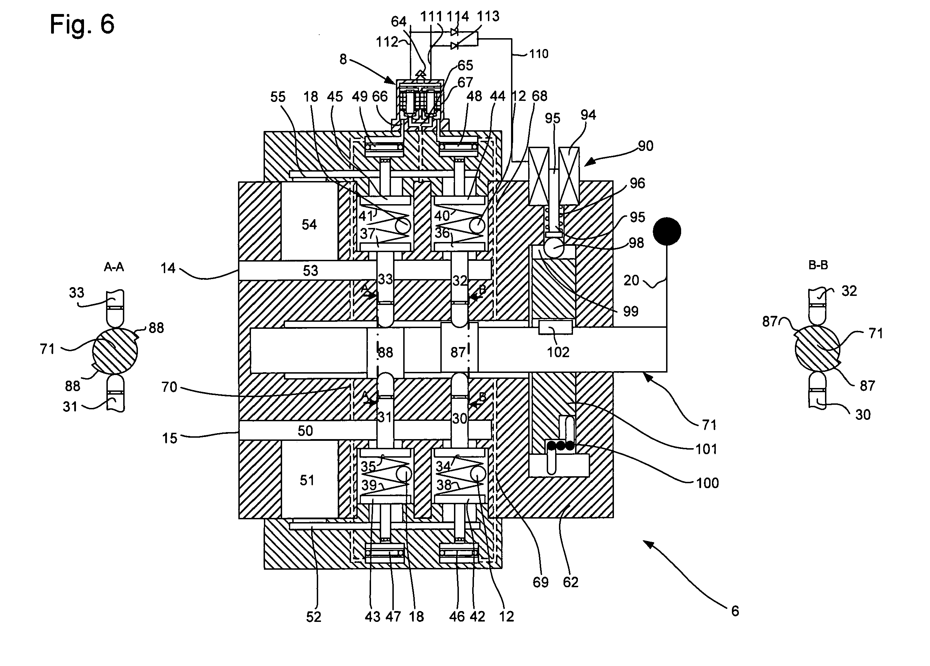

In einer weiteren in der Fig. 6 dargestellten Ausführungsform der erfindungsgemäßen Ventileinrichtung (6) ist zur Entriegelung der Rasteinrichtung (90) eine elektrische Spule (94) vorgesehen, die zusammen mit einem Teil des Stempels (95) eine Elektromagnetanordnung bildet, wobei der im Wirkungsbereich der elektrischen Spule (94) liegende Teil des Stempels (95) als Anker der Elektromagnetanordnung wirkt.

In der Ausführungsform gemäß Fig. 6 ist eine Entriegelung der Rasteinrichtung durch direkte elektrische Beaufschlagung der Spule (94) über eine elektrische Leitung (110) möglich. Die zuvor erläuterte vorteilhafte Funktion, dass eine Entriegelung der Rasteinrichtung (90) bereits bei Betätigung nur eines der Magnetventile (7, 8) erfolgt, kann gemäß Fig. 6 vorteilhaft durch eine Verbindung der elektrischen Leitung (110) über eine erste Diode (113) mit einer elektrischen Leitung (111) sowie einer zweiten Diode (114) mit einer zweiten elektrischen Leitung (112) ermöglicht werden. Die elektrischen Leitungen (111, 112) dienen zum Anschluss der Magnetventile (7, 8) an die elektronische Steuereinrichtung (5).

Es ist auch vorteilhaft, statt der Dioden (113, 114) eine direkte elektrische Verbindung zwischen der elektronischen Steuereinrichtung (5) und der Leitung (110) vorzusehen. In diesem Fall kann die elektronische Steuereinrichtung (5) aufgrund einprogrammierter Software-Algorithmen eine Entriegelung der Rasteinrichtung (90) durchführen.

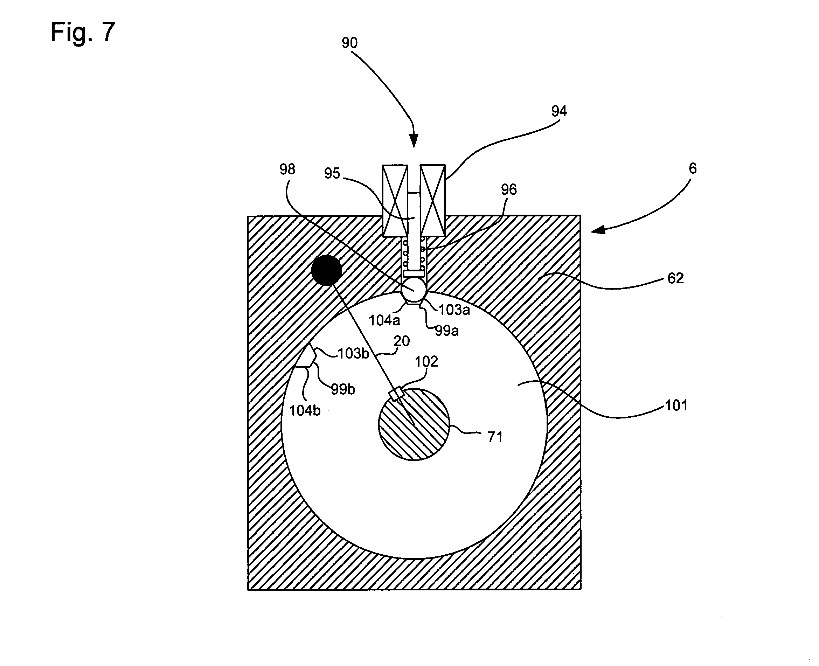

In der Ausführungsform gemäß Fig. 7 ist eine Schnittdarstellung durch die Rasteinrichtung 6 insbesondere der Figuren 3, 4, 5 und 6 gezeigt. Das Gehäuse 62 der Ventileinrichtung 6 weist eine Rasteinrichtung 90, eine Scheibe 101, eine Achse 71 und einen Bedienhebel 20 auf. Der Bedienhebel 20 und die Achse 71 sind über eine Passfeder 102 drehfest verbunden. Die Rasteinrichtung 90 weist eine elektrische Spule 94, einen Druckstempel 95, eine Feder 96 und eine Rastkugel 98 auf. Die Feder 96 stützt sich einerseits an dem Gehäuse 62 oder an der elektrischen Spule 94 bzw. der Rasteinrichtung 90 und andererseits an dem Druckstempel 95 ab, so dass der Druckstempel 95 die Rastkugel 98 in axialer Richtung in Richtung der Achse 71 bewegt und/oder drückt. Die Rastkugel 98 stütz sich an der Oberfläche der Scheibe 101 ab.

Soweit die Scheibe 101 eine Nut 99a, 99b aufweist, wird die Rastkugel 98 von der Feder 96 und dem Druckstempel 95 zumindest teilweise in die Nut 99a, 99b gedrückt und dort fixiert. Durch das zumindest teilweise Eingreifen der Rastkugel 98 in die Nut 99a, 99b wird eine freie Drehbewegung des Bedienhebels 20, der Achse 71 und der Scheibe 101 gegenüber dem Gehäuse 62 verhindert bzw. unterbunden. Durch eine Beaufschlagung der elektrischen Spule mit entsprechender Spannung und entsprechendem Strom, kann der Druckstempel 95 entgegen der Kraft der Feder 96 in axialer Richtung von der Achse 71 weg bewegt werden, so dass die Rastkugel 98 aus der Nut 99a, 99b austritt und eine Drehbewegung der Scheibe 101, der Achse 71 und der Bedienhebels 20 ermöglichen. Um den Bedienhebel 20 in die Neutralstellung zu bewegen, ist die in dieser Darstellung nicht gezeigte Drehfeder 100 vorhanden.

In diesem Ausführungsbeispiel sind eine erste Nut 99a für eine erste Rastposition der Scheibe 101 und eine zweite Nut 99b für eine zweite Rastposition der Scheibe 101 vorhanden. Es ist aber auch möglich weitere Nuten in der Scheibe anzuordnen, z.B. eine mit der Neutralstellung korrespondierende Nut. Die erste Nut 99a weist eine erste abgeschrägte Seitenfläche 103a und eine zweite abgeschrägte Seitenfläche 104a auf, welche eine gleitende Bewegung der Rastkugel 98 auf der Scheibe 101 ermöglichen und eine sprunghafte Verschiebung der Rastkugel in die erste Nut 99a oder aus der ersten Nut 99a vermeiden. Die zweite Nut 99b weist eine erste abgeschrägte Seitenfläche 103b und eine zweite abgeschrägte Seitenfläche 104b auf, welche eine gleitende Bewegung der Rastkugel 98 auf der Scheibe 101 ermöglichen und eine sprunghafte Verschiebung der Rastkugel in die zweite Nut 99b oder aus der zweiten Nut 99b vermeiden. Die abgeschrägten Seitenflächen 103a, 104a bzw. 103b, 104b verbessern die Justierung in die entsprechende Nut 99a bzw. 99b und verbessern auch den gleitenden Austritt aus der entsprechenden Nut 99a bzw. 99b.

## Patentansprüche

1. Ventilanordnung (200) für eine Luftfederungsanlage in einem Fahrzeug mit einem ersten und einem zweiten Sitzventil, welche jeweils einen Ventilsitz (24, 25) und einen Ventilschließkörper (21, 22) aufweisen, wobei die Ventilschließkörper (21, 22) durch Federkraft in einer vorbestimmten Position gehalten werden, wobei die Federkraft durch eine gemeinsame Feder (23) aufgebracht wird, welche einerseits auf den Ventilschließkörper (21) des ersten Sitzventils und andererseits auf den Ventilschließkörper (22) des zweiten Sitzventils einwirkt, **dadurch gekennzeichnet, dass** eine manuelle Betätigungseinrichtung (9, 20, 71, 87, 88) vorgesehen ist, die auf wenigstens einen der Ventilschließkörper (21, 22, 34, 35, 36, 37, 42, 43, 44, 45) einwirkt und bei deren Betätigung der bzw. die Ventilschließkörper (21, 22, 34, 35, 36, 37, 42, 43, 44, 45) von der vorbestimmten Position in einer andere Position bewegt wird, wobei wenigstens zwei Ventilanordnungen (200) vorgesehen sind und die manuelle Betätigungseinrichtung (9, 20, 71, 87, 88) eine Achse (71) aufweist, die über Nocken (87, 88) auf die Ventilschließkörper (21, 34, 35, 36, 37) des jeweiligen ersten Sitzventils einwirkt und bei deren Betätigung die Ventilschließkörper (21, 34, 35, 36, 37) von der vorbestimmten Position in einer andere Position bewegt werden.

2. Ventilanordnung nach Anspruch 1, **dadurch gekennzeichnet, dass** die vorbestimmte Position wenigstens eines der Ventilschließkörper (21, 22) der geöffneten oder der geschlossenen Position des Sitzventils entspricht.

3. Ventilanordnung nach einem der vorhergehenden Ansprüche, **dadurch gekennzeichnet, dass** die Längsachsen der Ventilschließkörper (21, 22) im wesentlichen miteinander fluchten.

4. Ventilanordnung nach einem der vorhergehenden Ansprüche, **dadurch gekennzeichnet, dass** die Längsachse der Feder (23) und die Längsachse wenigstens eines der Ventilschließkörper (21, 22) im wesentlichen miteinander fluchten.

5. Ventilanordnung nach einem der vorhergehenden Ansprüche, **dadurch gekennzeichnet, dass** wenigstens eines der Sitzventile als Plattenventil ausgebildet ist.

6. Ventilanordnung nach einem der vorhergehenden Ansprüche, **dadurch gekennzeichnet, dass** ferner eine Betätigungseinrichtung (7, 8, 10, 29, 30, 31, 32, 33, 46, 47, 48, 49) vorgesehen ist, bei deren Betätigung wenigstens einer der Ventilschließkörper (21, 22, 34, 35, 36, 37, 42, 43, 44, 45) von der vorbestimmten Position in einer andere Position bewegt wird.

7. Ventilanordnung nach dem vorhergehenden Anspruch, **dadurch gekennzeichnet, dass** die Betätigungseinrichtung (7, 8, 10, 29, 30, 31, 32, 33, 46, 47, 48, 49) wenigstens einen druckluftbetätigbaren Betätigungskolben (46, 47, 48, 49) aufweist, der auf wenigstens einen der Ventilschließkörper (21, 22, 34, 35, 36, 37, 42, 43, 44, 45) einwirkt.

8. Ventilanordnung nach Anspruch 6 oder 7, **dadurch gekennzeichnet, dass** die Betätigungseinrichtung (7, 8, 10, 29, 30, 31, 32, 33, 46, 47, 48, 49) eine Elektromagneteinrichtung (7, 8) aufweist.

9. Ventilanordnung nach dem vorhergehenden Anspruch, **dadurch gekennzeichnet, dass** die Elektromagneteinrichtung als elektropneumatisches Magnetventil (7, 8) ausgebildet ist, das zur Druckluftbeaufschlagung des druckluftbetätigbaren Betätigungskolbens (46, 47, 48, 49) eingerichtet ist.

10. Ventilanordnung nach dem vorhergehenden Anspruch, **dadurch gekennzeichnet, dass** die manuelle Betätigungseinrichtung (9, 20, 71, 87, 88) ein manuelles Bedienelement (9, 20) aufweist.

11. Ventilanordnung nach einem der vorhergehenden Ansprüche, **dadurch gekennzeichnet, dass** die Betätigungseinrichtung (7, 8, 10, 29, 30, 31, 32, 33, 46, 47, 48, 49) auf den Ventilschließkörper des jeweiligen ersten Sitzventils und die manuelle Betätigungseinrichtung (9, 20, 71, 87, 88) auf den Ventilschließkörper des jeweiligen zweiten Sitzventils einwirkt.

12. Ventileinrichtung (6) wobei die Ventileinrichtung
a) Anschlüsse (14, 15, 18) für einen Luftfederbalg (3) der Luftfederungsanlage sowie für einen Druckluftvorrat aufweist,
b) einen mit der Atmosphäre verbundenen Entlüftungsanschluss (12) aufweist,
c) eine Ventilanordnung (200) nach einem der vorhergehenden Ansprüche aufweist, mittels der der Luftfederbalg (3) mit dem Druckluftvorratsanschluss (18) oder dem Entlüftungsanschluss (12) verbindbar ist.

13. Ventileinrichtung nach dem vorhergehenden Anspruch, **dadurch gekennzeichnet, dass** die Achse (71) im Wesentlichen zentral zwischen den Ventilanordnungen (200) angeordnet ist.

14. Ventileinrichtung nach einem der Ansprüche 12 oder 13, **dadurch gekennzeichnet, dass** die druckluftbetätigbaren Betätigungskolben (46, 47, 48, 49) der Betätigungseinrichtung (7, 8, 10, 29, 30, 31, 32, 33, 46, 47, 48, 49) auf den der Achse (71) abgewandten Seiten der Ventilanordnungen (200) angeordnet sind.

## Claims

1. Valve assembly (200) for an air suspension system in a vehicle, with a primary and a secondary seat valve which have in each case a valve seat (24, 25) and a valve-closing body (21, 22), the valve-closing bodies (21, 22) being held in a predetermined position by spring force, the spring force being applied by a common spring (23) which acts, on the one hand, upon the valve-closing body (21) of the primary seat valve and, on the other hand, upon the valve-closing body (22) of the secondary seat valve, **characterized in that** a manual actuation device (9, 20, 71, 87, 88) is provided, which acts upon at least one of the valve-closing bodies (21, 22, 34, 35, 36, 37, 42, 43, 44, 45) and in the event of the actuation of which the valve-closing body or valve-closing bodies (21, 22, 34, 35, 36, 37, 42, 43, 44, 45) is or are moved from the predetermined position into another position, at least two valve assemblies (200) being provided, and the manual actuation device (9, 20, 71, 87, 88) having an axle (71) which acts via cams (87, 88) upon the valve-closing bodies (21, 34, 35, 36, 37) of the respective primary seat valve and in the event of the actuation of which the valve-closing bodies (21, 34, 35, 36, 37) are moved from the predetermined position into another position.

2. Valve assembly according to Claim 1, **characterized in that** the predetermined position of at least one of the valve-closing bodies (21, 22) corresponds to the opened or the closed position of the seat valve.

3. Valve assembly according to one of the preceding claims, **characterized in that** the longitudinal axes of the valve-closing bodies (21, 22) are essentially in alignment with one another.

4. Valve assembly according to one of the preceding claims, **characterized in that** the longitudinal axis of the spring (23) and the longitudinal axis of at least one of the valve-closing bodies (21, 22) are essentially in alignment with one another.

5. Valve assembly according to one of the preceding claims, **characterized in that** at least one of the seat valves is designed as a plate valve.

6. Valve assembly according to one of the preceding claims, **characterized in that**, furthermore, an actuation device (7, 8, 10, 29, 30, 31, 32, 33, 46, 47, 48, 49) is provided, in the event of the actuation of which at least one the valve-closing bodies (21, 22, 34, 35, 36, 37, 42, 43, 44, 45) is moved from the predetermined position into another position.

7. Valve assembly according to the preceding claim, **characterized in that** the actuation device (7, 8, 10, 29, 30, 31, 32, 33, 46, 47, 48, 49) has at least one compressed-air-actuable actuation piston (46, 47, 48, 49) which acts upon at least one of the valve-closing bodies (21, 22, 34, 35, 36, 37, 42, 43, 44, 45).

8. Valve assembly according to Claim 6 or 7, **characterized in that** the actuation device (7, 8, 10, 29, 30, 31, 32, 33, 46, 47, 48, 49) has an electromagnetic device (7, 8).

9. Valve assembly according to the preceding claim, **characterized in that** the electromagnetic device is designed as an electropneumatic solenoid valve (7, 8) which is designed to supply compressed air to the compressed-air-actuable actuation piston (46, 47, 48, 49).

10. Valve assembly according to the preceding claim, **characterized in that** the manual actuation device (9, 20, 71, 87, 88) has a manual operating element (9, 20).

11. Valve assembly according to one of the preceding claims, **characterized in that** the actuation device (7, 8, 10, 29, 30, 31, 32, 33, 46, 47, 48, 49) acts upon the valve-closing body of the respective primary seat valve and the manual actuation device (9, 20, 71, 87, 88) acts upon the valve-closing body of the respective secondary seat valve.

12. Valve device (6), the valve device having
a) connections (14, 15, 18) for a pneumatic spring concertina (3) of the air suspension system and for a compressed-air supply,
b) a venting connection (12) connected to the atmosphere,
c) a valve assembly (200) according to one of the preceding claims, by means of which the pneumatic spring concertina (3) can be connected to the compressed-air supply connection (18) or to the venting connection (12).

13. Valve device according to the preceding claim, **characterized in that** the axle (71) is arranged essentially centrally between the valve assemblies (200).

14. Valve device according to either one of Claims 12 and 13, **characterized in that** the compressed-air-actuable actuation pistons (46, 47, 48, 49) of the actuation device (7, 8, 10, 29, 30, 31, 32, 33, 46, 47, 48, 49) are arranged on those sides of the valve assemblies (200) which face away from the axle (71).

## Revendications

1. Agencement de clapet (200) pour un système de suspension pneumatique dans un véhicule, comprenant une première et une deuxième soupape à siège, lesquelles comprennent respectivement un siège de soupape (24, 25) et un corps de fermeture de soupape (21, 22), les corps de fermeture de soupape (21, 22) étant maintenus dans une position prédéterminée par une force de ressort, la force de ressort étant appliquée par un ressort commun (23) qui agit d'une part sur le corps de fermeture de soupape (21) de la première soupape à siège et d'autre part sur le corps de fermeture de soupape (22) de la deuxième soupape à siège, **caractérisé en ce qu'**un dispositif d'actionnement manuel (9, 20, 71, 87, 88) est prévu, lequel agit sur au moins l'un des corps de fermeture de soupape (21, 22, 34, 35, 36, 37, 42, 43, 44, 45) et, lors de son actionnement, le ou les corps de fermeture de soupape (21, 22, 34, 35, 36, 37, 42, 43, 44, 45) est/sont déplacé(s) de la position prédéterminée à une autre position, au moins deux agencements de clapet (200) étant prévus et le dispositif d'actionnement manuel (9, 20, 71, 87, 88) comprenant un axe (71) qui agit par le biais de cames (87, 88) sur les corps de fermeture de soupape (21, 34, 35, 36, 37) de la première soupape à siège respective et, lors de son actionnement, les corps de fermeture de soupape (21, 34, 35, 36, 37) étant déplacés de la position prédéterminée à une autre position.

2. Agencement de clapet selon la revendication 1, **caractérisé en ce que** la position prédéterminée d'au moins l'un des corps de fermeture de soupape (21, 22) correspond à la position ouverte ou à la position fermée de la soupape à siège.

3. Agencement de clapet selon l'une quelconque des revendications précédentes, **caractérisé en ce que** les axes longitudinaux des corps de fermeture de soupape (21, 22) sont essentiellement alignés l'un avec l'autre.

4. Agencement de clapet selon l'une quelconque des revendications précédentes, **caractérisé en ce que** l'axe longitudinal du ressort (23) et l'axe longitudinal d'au moins l'un des corps de fermeture de soupape (21, 22) sont essentiellement alignés l'un avec l'autre.

5. Agencement de clapet selon l'une quelconque des revendications précédentes, **caractérisé en ce qu'**au moins l'une des soupapes à siège est réalisée sous forme de soupape à plaque.

6. Agencement de clapet selon l'une quelconque des revendications précédentes, **caractérisé en ce qu'**il est en outre prévu un dispositif d'actionnement (7, 8, 10, 29, 30, 31, 32, 33, 46, 47, 48, 49), lors de l'actionnement duquel au moins l'un des corps de fermeture de soupape (21, 22, 34, 35, 36, 37, 42, 43, 44, 45) est déplacé de la position prédéterminée à une autre position.

7. Agencement de clapet selon la revendication précédente, **caractérisé en ce que** le dispositif d'actionnement (7, 8, 10, 29, 30, 31, 32, 33, 46, 47, 48, 49) comprend au moins un piston d'actionnement (46, 47, 48, 49) pouvant être commandé par air comprimé, lequel agit sur au moins l'un des corps de fermeture de soupape (21, 22, 34, 35, 36, 37, 42, 43, 44, 45).

8. Agencement de clapet selon la revendication 6 ou 7, **caractérisé en ce que** le dispositif d'actionnement (7, 8, 10, 29, 30, 31, 32, 33, 46, 47, 48, 49) comprend un dispositif électromagnétique (7, 8).

9. Agencement de clapet selon la revendication précédente, **caractérisé en ce que** le dispositif électromagnétique est réalisé sous forme d'électrovalve (7, 8) électropneumatique qui est conçue pour la sollicitation avec de l'air comprimé du piston d'actionnement (46, 47, 48, 49) pouvant être commandé par air comprimé.

10. Agencement de clapet selon la revendication précédente, **caractérisé en ce que** le dispositif d'actionnement manuel (9, 20, 71, 87, 88) comprend un élément de commande manuel (9, 20).

11. Agencement de clapet selon l'une quelconque des revendications précédentes, **caractérisé en ce que** le dispositif d'actionnement (7, 8, 10, 29, 30, 31, 32, 33, 46, 47, 48, 49) agit sur le corps de fermeture de soupape de la première soupape à siège respective et le dispositif d'actionnement manuel (9, 20, 71, 87, 88) agit sur le corps de fermeture de soupape de la deuxième soupape à siège respective.

12. Dispositif de clapet (6), le dispositif de clapet
a) comprenant des raccords (14, 15, 18) pour un soufflet de suspension pneumatique (3) du système de suspension pneumatique ainsi que pour une réserve d'air comprimé,
b) comprenant un raccord d'évacuation d'air (12) relié à l'atmosphère,
c) comprenant un agencement de clapet (200) selon l'une quelconque des revendications précédentes, au moyen duquel le soufflet de suspension pneumatique (3) peut être relié au raccord de réserve d'air comprimé (18) ou au raccord d'évacuation d'air (12).

13. Dispositif de clapet selon la revendication précédente, **caractérisé en ce que** l'axe (71) est disposé essentiellement centralement entre les agencements de clapet (200).

14. Dispositif de clapet selon la revendication 12 ou 13, **caractérisé en ce que** les pistons d'actionnement (46, 47, 48, 49) pouvant être commandés par air comprimé du dispositif d'actionnement (7, 8, 10, 29, 30, 31, 32, 33, 46, 47, 48, 49) sont disposés sur les côtés des agencements de clapet (200) opposés à l'axe (71).
